# EUROPEAN PATENT SPECIFICATION

(11) **EP 4 120 852 B1**
(45) Date of publication and mention of the grant of the patent: **25.02.2026**
(21) Application number: 21723793.2
(22) Date of filing: 11.03.2021
(51) Int. Cl.: A24C 5/35, B65G 47/51

(54) **VARIABLE CAPACITY CONVEYOR APPARATUS**
FÖRDERVORRICHTUNG MIT VERÄNDERLICHER KAPAZITÄT
APPAREIL TRANSPORTEUR À CAPACITÉ VARIABLE

(30) Priority: 19.03.2020 PL 43330020
(43) Date of publication of application: 25.01.2023
(73) Proprietor: International Tobacco Machinery Poland Sp. z o.o., 26-600 Radom (PL)
(72) Inventor: OSTRZYZEK, Artur, 26-600 Radom (PL)
(74) Representative: Markieta, Jaroslaw Franciszek
(86) International application number: PCT/IB2021/052017
(87) International publication number: WO 2021/186299

(56) References cited:
- EP-A2- 1 273 537
- WO-A1-2011/012802
- WO-A1-2011/019291

## Description

The object of the invention is a variable capacity conveyor apparatus.

In the tobacco industry, conveyors adapted to convey flows of single layers of rod-like articles, such as cigarettes, filter rods, cigars, etc., as well as mass flows consisting of multiple layers of rod-like articles are known. Such conveyors may be grouped one after another to form variable capacity buffers. A high capacity buffer is disclosed in the patent EP2230951B1. A medium capacity buffer is known from the patent EP2464250B1. The patent application GB995663A shows a low capacity buffer. In all three patents, it is common for some conveyors to be movable to achieve a variation in capacity. There is a need to provide variable capacity buffers having movable conveyors that meet the requirements for the smallest possible overall surface dimensions and the smallest possible floor area occupied by the buffer. Low-capacity buffers are suitable for production lines with short downtimes.

WO2011/012802 A1 discloses a variable capacity conveyor apparatus according to pre-characterizing part of claim 1.

A variable capacity conveyor apparatus for conveying a mass flow of rod-like articles arranged transversely to the mass flow conveying direction, comprising: an inlet, an outlet, a first conveyor having at least one first conveying element for supporting the mass flow, a second conveyor having a second conveying element for supporting the mass flow. The inlet is connected to an inlet of the first conveyor, an outlet of the first conveyor is connected to an inlet of the second conveyor, and an outlet of the second conveyor is connected to the outlet. The first conveying element is adapted to move along a first movement track comprising a filled part of the first movement track and an unfilled part of the first movement track, whereas in the area of the filled part of the first movement track the conveyor is adapted to convey the rod-like articles on the first conveying element between the inlet and the outlet of the first conveyor, and in the area of the unfilled part of the first movement track the conveyor is adapted to move the first conveying element without the rod-like articles between the outlet of the first conveyor and the inlet of the first conveyor. The filled part of the first movement track and the unfilled part of the first movement track have a varying or variable length. The second conveying element is adapted to move along a second movement track comprising a filled part of the second movement track and an unfilled part of the second movement track. In the area of the filled part of the second movement track, the conveyor is adapted to convey the rod-like articles on the second conveying element between the inlet and the outlet of the second conveyor, and in the area of the unfilled part of the second movement track, the conveyor is adapted to move the second conveying element without the rod-like articles between the outlet of the second conveyor and the inlet of the second conveyor. The filled part of the second movement track and the unfilled part of the second movement track have a varying or variable length. The second movement track lies in a plane constituting a conveying plane, the unfilled part of the first movement track of the first conveying element lies outside of the conveying plane.

The object of the invention is defined in claim 1. Apparatus according to the invention is characterized by the unfilled part (T3B; T3B', T3B") of the first movement track (T3; T3', T3") is situated at least partially at an angle to the filled part (T3A; T3A', T3A") of the first movement track.

In the apparatus according to the invention the unfilled part of the first movement track is situated at least partially parallel to the filled part of the first movement track.

In the apparatus according to the invention is the unfilled part of the first movement track is situated at least partially at an angle to the filled part of the first movement track.

In the apparatus according to the invention the apparatus is provided with two first conveying elements moving along the first movement tracks, the unfilled parts of the first movement tracks being situated on two sides of the conveying plane.

In the apparatus according to the invention the filled parts of the first movement tracks are situated on two sides of the conveying plane.

In the apparatus according to the invention the filled parts and/or the unfilled parts of the first movement tracks are situated symmetrically to the conveying plane.

In the apparatus according to the invention the first conveyor is provided with a first roller and a second roller movable in a direction transverse to their axis of rotation.

In the apparatus according to the invention the first roller is situated below the filled part of the first movement track.

In the apparatus according to the invention the second roller is situated below the filled part of the second movement track.

In the apparatus according to the invention the first roller and/or the second roller is a driving roller for the first conveying element.

In the apparatus according to the invention the first roller and the second roller are linearly slidable.

The apparatus according to the invention is further characterised in that the first roller and the second roller move in opposite directions, varying the length of the filled part of the first movement track and the length of the unfilled part of the first movement track.

The apparatus according to the invention is further characterised in that the first roller and the second roller move in the same direction, varying the length of the filled part of the first movement track and the length of the unfilled part of the first movement track.

The apparatus according to the invention is further characterised in that the filled part of the first movement track and/or the unfilled part of the first movement track comprise(s) a linear section.

The apparatus according to the invention is further characterised in that the filled part of the movement track and/or the unfilled part of the first movement track comprise(s) an arched section.

According to the invention, it is possible to implement a variable capacity buffer provided with movable conveyors, having small overall dimensions and occupying a small floor area. In particular, a small dimension of the buffer in the horizontal direction parallel to the direction of mass flow conveying on the conveyors was achieved.

The object of the invention was shown in detail in preferred embodiments in a drawing in which:
- Fig. 1: shows a variable capacity conveyor apparatus in the first embodiment in the minimum capacity position;
- Fig. 2: shows the conveyor apparatus of Fig. 1 in a top view;
- Fig. 3: shows the conveyor apparatus of Fig. 1 in the intermediate capacity position;
- Fig. 4: shows the conveyor apparatus of Fig. 3 in a top view;
- Fig. 5: shows the conveyor apparatus of Fig. 1 in the maximum capacity position;
- Fig. 6: shows the conveyor apparatus of Fig. 5 in a top view;
- Fig. 7: shows a variable capacity conveyor apparatus in the second embodiment in the intermediate capacity position;
- Fig. 8: shows the conveyor apparatus of Fig. 7 in a top view;
- Fig. 9: shows a variable capacity conveyor apparatus in the third embodiment in the intermediate capacity position, and
- Fig. 10: shows a variable capacity conveyor apparatus in the fourth embodiment in the intermediate capacity position.

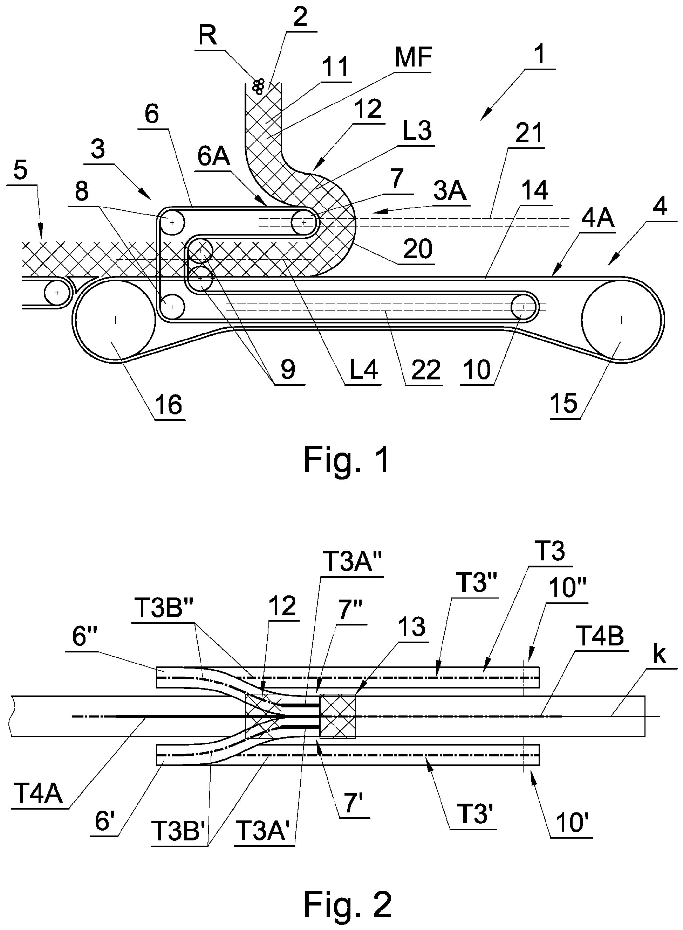

The conveyor apparatus 1 for conveying the mass flow in the first embodiment shown in Fig. 1 to Fig. 6 comprises an inlet 2, a first conveyor 3, a second conveyor 4 and an outlet 5. In Fig. 1, there are shown several rod-like articles R at the inlet 2, and further the mass flow of the rod-like articles MF is shown by hatching. The mass flow comprises a mass of the rod-like articles R with a height of several articles, the rod-like articles R being oriented transversely to the direction in which they are conveyed and adjacent to one another. The first conveyor 3 and the second conveyor 4 are conveyors provided with endless conveying elements 6 and 14, respectively, which are used to support and to move the rod-like articles R of the mass flow MF. The first conveyor 3 is provided with a conveying element 6 in the form of two chains 6' and 6" which may be bent relative to two axes perpendicular to the longitudinal axis of the chain. The chains 6', 6" are wound around linearly movable rollers 7, stationary rollers 8 and 9 and linearly movable rollers 10, whereas any of such rollers may be a drive roller. The rollers 7', 7" for winding the first conveying elements 6', 6" may be coaxially situated, or may have the form of a single roller for both first conveying elements 6', 6". Similarly, the rollers 10', 10" for winding the first conveying elements 6', 6" may be coaxially situated, or may also have the form of a single roller. The rollers 7', 7" are attached slidably along a guide 21, while the rollers 10', 10" are attached slidably along a guide 22, the guides 21 and 22 being shown in a simplified manner with dashed lines (for simplicity, the drive mechanism for moving the rollers 7', 7", 10', 10" is not shown). A conveying surface 6A - a chain conveying surface 6', 6" is positioned below the inlet 2, whereas the conveying surface 6A supports the rod-like articles R in the section from the outlet of a channel 11, which constitutes the inlet 12 of the first conveyor 3, to the outlet 13. The conveyor 3 conveys the rod-like articles R in a first direction, from left to right, from the inlet 12 to the outlet 13, as shown in Fig. 1, from the input position to the outlet position at the outlet end 3A of the conveyor apparatus 3. At the outlet end 3A of the conveyor apparatus 3, the rod-like articles R fall from the outlet 13 of the conveyor 3 through the inlet 17 onto a conveyor 4 at the input position of the conveyor 4. In Figs. 2, 4 and 6, the inlet 12 of the first conveyor 3 is shown as a hatched rectangle, and the outlet 13 of the first conveyor 3 is shown in a similar way. An end guide 20, which in this embodiment comprises an arched surface extending around the outlet end 3A of the conveyor 3, is situated so as to guide the rod-like articles R so that they move around the outlet end 3A and onto the conveying surface 4A of the conveyor 4. The conveyor 4 conveys the rod-like articles R in a second direction, from right to left, from the inlet 17 to the outlet 18, as shown in Fig. 1, opposite to the direction in which the rod-like articles R are conveyed by the conveyor 3, until the rod-like articles R reach an outlet position at the outlet end of the conveyor 4.

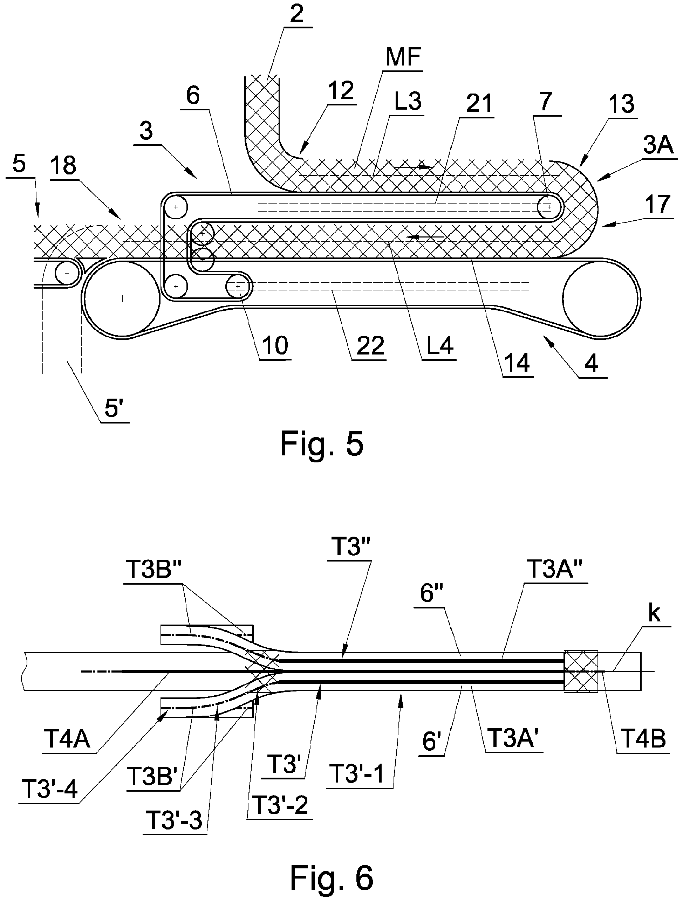

The transport of the rod-like articles R by the first conveyor 3 takes place over a first conveying length L3 from the inlet 12 to the outlet 13 of the first conveyor 3 at a first conveying level P1 coinciding with the conveying surface 6A. The first conveying length L3 is variable depending on the level of filling of the conveyor apparatus 1 with the rod-like articles R. The second conveyor 4 is provided with a conveying element 14 which may have the form of a chain or a belt. The guides of the conveying elements 6', 6" and 14 are not shown in the drawing. The conveying element 14 is wound around rollers 15, 16, one of which being a drive roller. The conveying surface 4A of the conveying element 4 is situated below the conveyor 3, and the outlet 13 of the first conveyor 3 is connected to the inlet 17 of the second conveyor 4. The transport of the rod-like articles R takes place over a second conveying length L4 from the inlet 17 to the outlet 18 of the second conveyor 4 at a second conveying level P2 coinciding with the conveying surface 4A. The second conveying length L4 is variable depending on the level of filling of the conveyor apparatus 1 with the rod-like articles R. The outlet 18 of the second conveyor 4 is connected to the outlet 5 of the apparatus 1 which may be directed downwards (the outlet 5' is shown with a dashed line) as shown in Fig. 6.

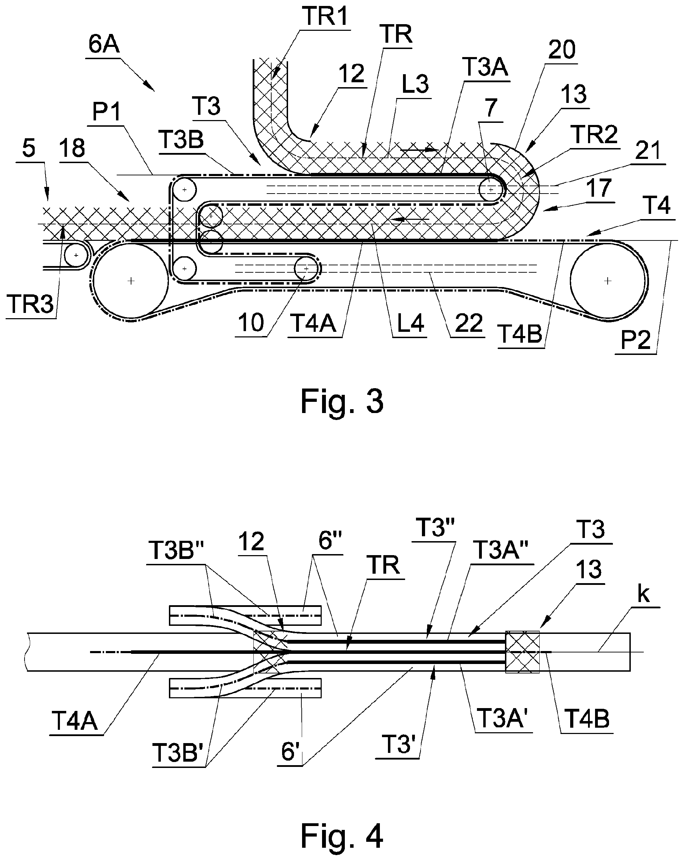

Figs. 1 to 6 show examples of positions of the apparatus 1 from minimum filling to maximum filling. Figs. 1 and 2 show the apparatus 1 in the minimum position where the mass flow follows the shortest possible path. Figs. 3 and 4 show the apparatus 1 in an intermediate position, while Figs. 5 and 6 show the apparatus 1 in a maximum position wherein the apparatus 1 contains the maximum possible number of rod-like articles R, and the mass flow MF follows the longest possible path, i.e. when the first conveying length L3 and the second conveying length L4 have the maximum length. In the maximum position, the endless conveying element 6', 6" and the endless conveying element 14 overlap to the maximum extent. In this configuration, the rod-like articles R falling from the inlet 2 onto the endless conveying element 6', 6" travel along the maximum first conveying length L3 in the first direction before reaching the outlet position of the conveyor 3. In this configuration, the rod-like articles R falling from the conveyor 3 reach a position on the conveyor 4 which is furthest from the outlet end of the conveyor 4 in the first direction. The rod-like articles R then travel along the maximum second conveying length L4 in the second direction, before reaching the outlet position on the conveyor 4 and further the outlet 5.

During the operation of the apparatus, when the roller 7', 7" is moved along the guide 21 from the position shown in Figs. 5 and 6 to the intermediate, second position shown in Figs. 3 and 4, the overlap between the endless conveying element 6', 6" and the conveyor 4 is reduced. The length of the first endless conveying element 6', 6" is constant so that when the roller 7', 7" moves to the left, the roller 10', 10" moves to the right. In the configuration shown in Fig. 3, the rod-like articles R falling from the inlet 2 onto the endless conveying element 6', 6" travel along the relatively shorter first conveying length L3 in the first direction before reaching the outlet position on the conveyor 3. In this configuration, the rod-like articles R falling from the conveyor 3 reach a position on the conveyor 4 which is closer to the outlet end of the conveyor 4 in the first direction. The rod-like articles R then travel along the shorter second conveying length L4 in the second direction, before reaching the outlet position on the conveyor 4, and thus the outlet 5.

When the roller 7 is moved along the guide 21 from the second intermediate position shown in Fig. 3 to the third position shown in Fig. 1, the overlap between the endless conveying element 6 and the conveyor 4 is reduced to a minimum. In this configuration, the rod-like articles R falling from the inlet 2 onto the endless conveying member 6', 6" travel along the minimum first conveying length L3 in the first direction before reaching the starting position on the conveyor 3. In this configuration, the rod-like articles R fall from the conveyor 3 and reach a position on the conveyor 4 which is closest to the outlet end of the conveyor 4 in the first direction. The rod-like articles R then travel along the second length of the conveyor L4 in the second direction, before reaching the outlet position of the conveyor 4, and thus the outlet 5. In the minimum position, the roller 7', 7" occupies the extreme left position and the roller 10', 10" occupies the extreme right position.

The first conveying element 6 is adapted to move along the first movement track T3, whereas the movement track T3 comprises a filled part T3A of the first movement track T3 and an unfilled part T3B of the first movement track. In the embodiment shown, for the first two conveying elements 6', 6", Fig. 4 shows two first filled parts T3A' and T3A" (thick, continuous lines) and two first unfilled parts T3B', T3B" (medium, dotted lines) of the first two tracks T3', T3". The filled part T3A', T3A" of the first track T3', T3" is adapted to convey the rod-like articles R between the inlet 12 and the outlet 13 of the first conveyor 3. The first conveying element 6', 6" moves without the rod-like articles R between the outlet 13 of the first conveyor 3 and the inlet 12 of the first conveyor 3 along the unfilled parts T3B', T3B". The first filled part T3A', T3A" corresponds to the conveying length L3 and is variable. The first filled part T3A', T3A" reaches its minimum length as shown in Fig. 1 and Fig. 2 when the outlet 13 of the first conveyor 3 is closest to the inlet 12 of the first conveyor 3, i.e. when the conveyor apparatus 1 is in the minimum capacity position. The first filled part T3A', T3A" reaches its maximum length as shown in Fig. 5 and Fig. 6 which show the conveyor apparatus 1 in the maximum capacity position when the inlet 12 and the outlet 13 are furthest apart. The first filled parts T3A', T3A" and the first unfilled parts T3B', T3B" of the first movement tracks T3', T3" are shown longitudinally centrally to the width of the first endless conveying element 6', 6". Similarly, the second filled parts T4A (thick, continuous lines) and the second unfilled parts T4B (medium, dotted lines) of the movement track T4 are shown longitudinally centrally to the width of the second endless conveying element 14. The second movement track T4 of the second endless conveying element 14 comprises the second filled part T4A adapted to convey the rod-like articles R between the inlet 17 and the outlet 18 of the second conveyor 4, and the second unfilled part T4B of the second movement track T4 along which the first conveying element 14 moves without the rod-like articles R between the outlet 18 of the second conveyor 4 and the inlet 17 of the second conveyor 4. The second filled part T4B of the second movement track T4 corresponds to the conveying length L4 and is variable.

The movement track TR of the rod-like articles R lies on a vertically situated conveying plane k (the plane k is perpendicular to the plane of Figs. 2, 4 and 6 and parallel to the plane of Figs. 1, 3 and 5). The movement track TR of the rod-like articles R is the track along which the geometric centres of the rod-like articles R move. The filled part T4A of the second movement track and the unfilled part T4B of the second movement track T4 lie in the conveying plane k, in other words, the second movement track T4 lies in the conveying plane k. The movement track TR of the rod-like articles R is also marked in Fig. 3 centrally along the mass flow MF. The movement track TR of the rod-like articles is also shown in Fig. 4 and is situated substantially centrally to the second conveyor 4, as well as centrally to the conveying elements 6', 6".

The movement track T3 may comprise a plurality of rectilinear or arched sections. In Fig. 6, only several sections T3'-1, T3'-2, T3'-3, T3'-4 are marked, whereas the sections T3'-1 and T3'-4 are rectilinear sections and the sections T3'-2, T3'-3 are arched sections, the arched sections being tangential to one another and to the rectilinear sections. The movement track T3' sections are arranged spatially, vertically and horizontally, whereas it is possible to arrange the sections at an angle to vertical or horizontal direction.

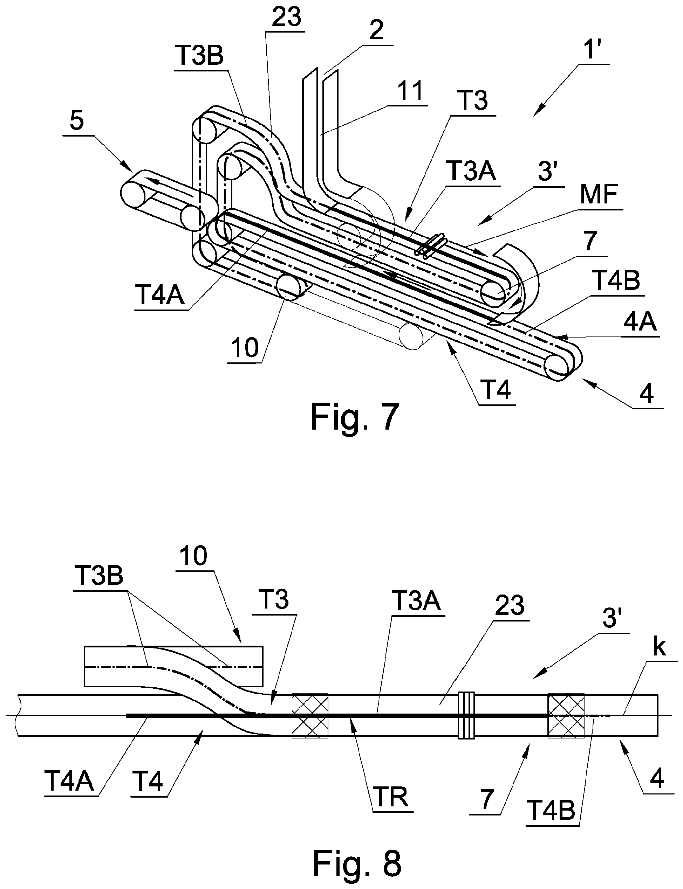

The conveyor apparatus 1' in the second embodiment shown in Figs. 7 and 8 comprises a first conveyor 3' provided with a first conveying element in the form of a chain 23. The mass flow MF takes place like in the first embodiment, the rod-like articles R from the inlet 2 flow through the channel 11 onto the conveying surface of the chain 23 of the conveyor 3', then onto the conveyor 4 and to the outlet 5. As shown in Fig. 8, the filled part T3A of the first movement track T3 of the conveying element (chain) 23 lies in the conveying plane k, while the unfilled part T3B is situated so that it is partly outside the conveying plane k. In the embodiment shown, a portion of the unfilled part T3B is situated parallel to both the filled part T3A of the first movement track T3 and to the conveying plane k. The roller 10 of the second conveyor 4 is situated below the second conveying level, i.e. below the conveying surface 4A of the conveyor 4. Similar to the first embodiment, when increasing the capacity of the apparatus, i.e. increasing the amount of accumulated rod-like articles R, the roller 7 is moved to the right, while the roller 10 is moved to the left in the drawing.

In Fig. 8, there is marked the movement track TR of the rod-like articles R which is situated in the conveying plane k, substantially centrally to the second conveyor 4, as well as centrally to the conveying element 23 in the area of the filled part T3A of the first movement track T3 of the first conveying element 23.

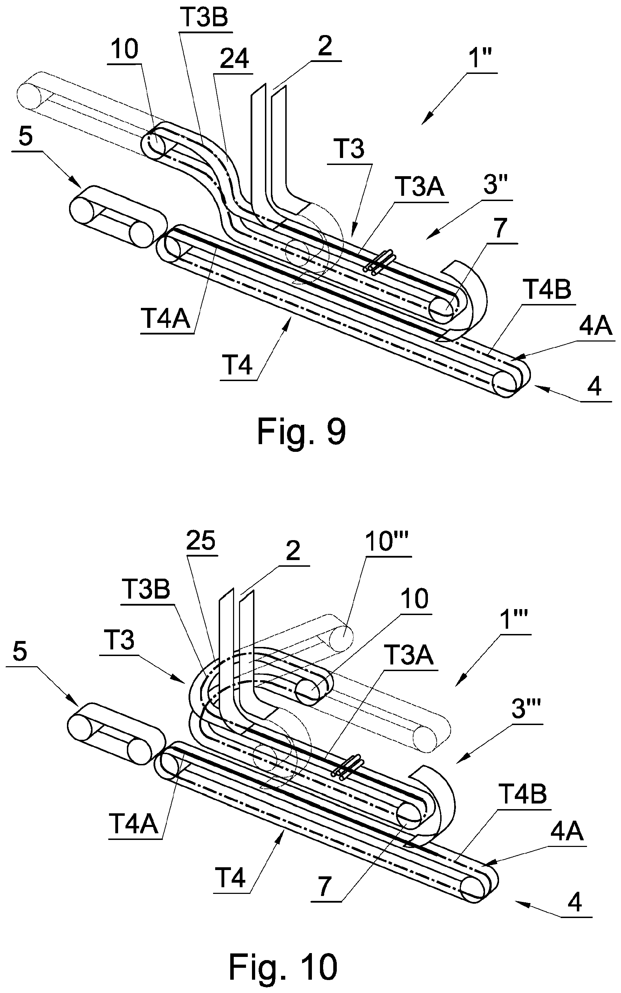

The conveyor apparatus 1" in the third embodiment shown in Fig. 9 comprises a first conveyor 3" provided with a first conveying element in the form of a chain 24. During the operation of the apparatus, when the filled part T3A of the first movement track T3 of the first conveying element 24 of the first conveyor 3" varies its length, the roller 7 and the roller 10 move in the same direction, whereas the rollers 7 and 10 are situated above the conveying surface 4A of the second conveyor 4. Also the first movement track T3 of the first conveying element 24 is situated above the conveying surface 4A. The movement track T3 comprises rectilinear and arched sections, the arched sections being situated tangentially to the arched sections and to the rectilinear sections.

The fourth embodiment of the conveyor apparatus 1‴ shown in Fig. 10 is similar to the previous embodiment. The conveying element 25 of the first conveyor 3‴ is U-shaped. During the operation of the apparatus, when the filled part T3A of the first movement track T3 of the first conveying element 25 of the first conveyor 3‴ varies its length, the roller 7 and the roller 10 move in opposite directions. Fig. 10 shows an alternative position of the roller 10‴ for which a portion of the conveying element 25 and thus a portion of the unfilled part T3A of the first movement track T3 is situated at an angle to the filled part T3A of such track. The first movement track T3 comprises rectilinear and arched sections, the arched sections being situated tangentially to the arched sections and to the rectilinear sections.

The movement of the movable roller 7 along the guide 21 and of the movable roller 10 along the guide 22 may be controlled manually or may be controlled by a controller (not shown), such as an analogue or digital controller for industrial processes, a programmable controller, a personal computer, a minicomputer or a tablet computer. The signal may be transmitted via wires, wireless communication, optical fibres, or any other communication method. Generally, the controller may receive signals from the apparatus upstream or downstream of the conveyor apparatus and may cause the capacity of the conveyor apparatus to vary depending on the signals received.

The position of the movable roller 7 along the guide 21 and of the movable roller 10 along the guide 22, and thus a variation in the length of the filled part T3A, T3A', T3A" of the first movement track T3 and the length of the filled part T4A of the second track T4 during the operation, depends on the proportion of the rate of inflow from the inlet 2 and the rate of outflow from the outlet 5. If the inflow rate is greater than the outflow rate, the movable roller 7 will move to the right, the conveyor 3 will stop after reaching the maximum position. If the inflow rate is smaller than the outflow rate, the movable roller 7 will move to the left, the conveyor 3 will stop after reaching the minimum position.

For example, when a feeding apparatus (situated upstream of the conveyor apparatus in the flow direction) provides a signal indicating a reduced or stopped flow of the rod-like articles, the controller controls the conveyor apparatus so as to reduce the capacity of the conveyor apparatus. Conversely, when the feeding apparatus provides a signal indicating an increased or started flow of the rod-like articles, the controller controls the conveyor apparatus so as to increase the capacity of the conveyor apparatus.

Similarly, when a receiving apparatus (situated downstream of the conveyor apparatus in the flow direction) provides a signal indicating a reduced or stopped flow of the rod-like articles, the controller controls the conveyor apparatus so as to increase the capacity of the conveyor apparatus, and when the receiving apparatus provides a signal indicating an increased or started flow of the rod-like articles, the controller controls the conveyor apparatus so as to reduce the capacity of the conveyor apparatus.

In other configurations, the inlet and/or the outlet of the conveyor apparatus or the feeding and/or receiving apparatus may be provided with sensors, such as optical sensors, ultrasonic sensors or mechanical sensors, which may provide signals indicating, for example, reduced, stopped, increased or started flow at the inlet and/or at the outlet. The controller may be configured so as to respond in a similar manner to signals from an apparatus upstream or downstream of the conveyor apparatus.

The embodiments described above are shown for illustration purposes only. Substitute solutions, modifications in the embodiments shown may be used without affecting at least some of the effects and advantages of the configurations discussed above. Thus, the embodiments described above are to be understood as non-limiting, and the invention is defined by the scope of the appended claims.

## Claims

1. A variable capacity conveyor apparatus for conveying a mass flow of rod-like articles arranged transversely to the mass flow conveying direction, comprising:
an inlet (2),
an outlet (5),
a first conveyor (3) having at least one first conveying element (23; 24; 25; 6', 6") for supporting the mass flow,
a second conveyor (4) having a second conveying element (14) for supporting the mass flow,
whereas the inlet (2) is connected to an inlet (12) of the first conveyor (3), an outlet (13) of the first conveyor (3) is connected to an inlet (17) of the second conveyor (4), and an outlet (18) of the second conveyor (4) is connected to the outlet (5),
furthermore, the first conveying element (23; 24; 25; 6', 6") is adapted to move along a first movement track (T3; T3', T3") comprising a filled part (T3A; T3A', T3A") of the first movement track (T3; T3', T3") and an unfilled part (T3B; T3B', T3B") of the first movement track (T3; T3', T3"), whereas in the area of the filled part (T3A; T3A', T3A") of the first movement track (T3; T3', T3") the conveyor (3) is adapted to convey the rod-like articles (R) on the first conveying element (23; 24; 25; 6', 6") between the inlet (12) and the outlet (13) of the first conveyor (3), and in the area of the unfilled part (T3B; T3B', T3B") of the first movement track (T3) the conveyor (3) is adapted to move the first conveying element (23; 24; 25; 6', 6") without the rod-like articles (R) between the outlet (13) of the first conveyor (3) and the inlet (12) of the first conveyor (3),
whereas the filled part (T3A; T3A', T3A") of the first movement track (T3; T3', T3") and the unfilled part (T3B; T3B', T3B") of the first movement track (T3; T3', T3") have a varying or variable length,
furthermore, the second conveying element (14) is adapted to move along a second movement track (T4) comprising a filled part (T4A) of the second movement track (T4) and an unfilled part (T4B) of the second movement track (T4), whereas in the area of the filled part (T4A) of the second movement track (T4) the conveyor (4) is adapted to convey the rod-like articles (R) on the second conveying element (14) between the inlet (17) and the outlet (18) of the second conveyor (4), and in the area of the unfilled part (T4B) of the second movement track (T4), the conveyor (4) is adapted to move the second conveying element (14) without the rod-like articles between the outlet (18) of the second conveyor (4) and the inlet (17) of the second conveyor (4),
whereas the filled part (T4A) of the second movement track (T4) and the unfilled part (T4B) of the second movement track (T4) have a varying or variable length,
with the second movement track (T4) lying in a plane constituting a conveying plane (k),
the unfilled part (T3B; T3B', T3B") of the first movement track (T3; T3', T3") of the first conveying element (23; 24; 25; 6', 6") lies outside of the conveying plane (k)
**characterised in that**
the unfilled part (T3B; T3B', T3B") of the first movement track (T3; T3', T3") is situated at least partially at an angle to the filled part (T3A; T3A', T3A") of the first movement track.

2. The apparatus as in claim 1, wherein the unfilled part (T3B; T3B', T3B") of the first movement track (T3; T3', T3") is situated at least partially parallel to the filled part (T3A; T3A', T3A") of the first movement track.

3. The apparatus as in claim 1, wherein the apparatus is provided with two first conveying elements (6', 6") moving along the first movement tracks (T3', T3"), and the unfilled parts (T3B', T3B") of the first movement tracks (T3', T3") are situated on two sides of the conveying plane (k).

4. The apparatus as in claim 1, wherein the filled parts (T3A', T3A") of the first movement tracks (T3', T3") are situated on two sides of the conveying plane (k).

5. The apparatus as in claim 3 or 4, wherein the filled parts (T3A', T3A") and/or the unfilled parts (T3B', T3B") of the first movement tracks (T3', T3") are situated symmetrically to the conveying plane (k).

6. The apparatus as in any of the claims from 1 to 5, wherein the first conveyor (3, 3', 3", 3") is provided with a first roller (7; 7', 7") and a second roller (10; 10', 10") movable in a direction transverse to their axis of rotation.

7. The apparatus as in claim 6, wherein the first roller (7; 7', 7") is situated below the filled part (T3A; T3A', T3A") of the first movement track (T3; T3', T3").

8. The apparatus as in any of the claims 6 or 7, wherein the second roller (10; 10', 10") is situated below the filled part (T4B) of the second movement track (T4).

9. The apparatus as in any of the claims from 6 to 8, wherein the first roller (7; 7', 7") and/or the second roller (10; 10', 10") is a driving roller for the first conveying element (23; 24; 25; 6', 6").

10. The apparatus as in any of the claims from 6 to 9, wherein the first roller (7; 7', 7") and the second roller (10; 10', 10") are linearly slidable.

11. The apparatus as in any of the claims from 6 to 10, wherein the first roller (7; 7', 7") and the second roller (10; 10', 10") move in opposite directions, varying the length of the filled part (T3A; T3A', T3A") of the first movement track (T3; T3', T3") and the length of the unfilled part (T3B; T3B', T3B") of the first movement track (T3; T3', T3").

12. The apparatus as in any of the claims from 6 to 10, wherein the first roller (7; 7', 7") and the second roller (10; 10', 10") move in the same direction, varying the length of the filled part (T3A; T3A', T3A") of the first movement track (T3; T3', T3") and the length of the unfilled part (T3B; T3B', T3B") of the first movement track (T3; T3', T3").

13. The apparatus as in any of the claims from 1 to 12 wherein the filled part (T3A; T3A', T3A") of the first movement track (T3; T3', T3") and/or the unfilled part (T3B; T3B', T3B") of the first movement track (T3; T3', T3") comprise(s) a linear section.

14. The apparatus as in any of the claims from 1 to 12, wherein the filled part (T3A; T3A', T3A") of the first movement track (T3; T3', T3") and/or the unfilled part (T3B; T3B', T3B") of the first movement track (T3; T3', T3") comprise(s) an arched section.

## Patentansprüche

1. Fördervorrichtung mit variabler Leistung zum Fördern eines Massenstroms von stabförmigen Artikeln, die quer zur Massenstromförderrichtung angeordnet sind, aufweisend:
einen Eintritt (2),
einen Austritt (5),
einen ersten Förderer (3) mit mindestens einem ersten Förderelement (23; 24; 25; 6', 6") zum Unterstützen des Massenstroms,
einen zweiten Förderer (4) mit einem zweiten Förderelement (14) zum Unterstützen des Massenstroms,
wobei der Eintritt (2) mit einem Eintritt (12) des ersten Förderers (3) verbunden ist, ein Austritt (13) des ersten Förderers (3) mit einem Eintritt (17) des zweiten Förderers (4) verbunden ist und ein Austritt (18) des zweiten Förderers (4) mit dem Austritt (5) verbunden ist,
ferner das erste Förderelement (23; 24; 25; 6', 6") dazu eingerichtet ist, sich entlang einer ersten Bewegungsbahn (T3; T3', T3") zu bewegen, die einen gefüllten Abschnitt (T3A; T3A', T3A") der ersten Bewegungsbahn (T3; T3', T3") und einen ungefüllten Abschnitt (T3B; T3B', T3B") der ersten Bewegungsbahn (T3; T3', T3") aufweist, wobei im Bereich des gefüllten Abschnitts (T3A; T3A', T3A") der ersten Bewegungsbahn (T3; T3', T3") der Förderer (3) dazu eingerichtet ist, die stabförmigen Artikel (R) auf dem ersten Förderelement (23; 24; 25; 6', 6") zwischen dem Eintritt (12) und dem Austritt (13) des ersten Förderers (3) zu fördern, und im Bereich des ungefüllten Abschnitts (T3B; T3B', T3B") der ersten Bewegungsbahn (T3) der Förderer (3) dazu eingerichtet ist, das erste Förderelement (23; 24; 25; 6', 6") ohne die stabförmigen Artikel (R) zwischen dem Austritt (13) des ersten Förderers (3) und dem Eintritt (12) des ersten Förderers (3) zu bewegen,
wobei der gefüllte Abschnitt (T3A; T3A', T3A") der ersten Bewegungsbahn (T3; T3', T3") und der ungefüllte Abschnitt (T3B; T3B', T3B") der ersten Bewegungsbahn (T3; T3', T3") eine variierende oder variable Länge aufweisen,
wobei ferner das zweite Förderelement (14) dazu eingerichtet ist, sich entlang einer zweiten Bewegungsbahn (T4) zu bewegen, die einen gefüllten Abschnitt (T4A) der zweiten Bewegungsbahn (T4) und einen ungefüllten Abschnitt (T4B) der zweiten Bewegungsbahn (T4) aufweist, wobei im Bereich des gefüllten Abschnitts (T4A) der zweiten Bewegungsbahn (T4) der Förderer (4) dazu eingerichtet ist, die stabförmigen Artikel (R) auf dem zweiten Förderelement (14) zwischen dem Eintritt (17) und dem Austritt (18) des zweiten Förderers (4) zu fördern, und im Bereich des ungefüllten Abschnitts (T4B) der zweiten Bewegungsbahn (T4) der Förderer (4) dazu eingerichtet ist, das zweite Förderelement (14) ohne die stabförmigen Artikel zwischen dem Austritt (18) des zweiten Förderers (4) und dem Eintritt (17) des zweiten Förderers (4) zu bewegen,
wobei der gefüllte Abschnitt (T4A) der zweiten Bewegungsbahn (T4) und der ungefüllte Abschnitt (T4B) der zweiten Bewegungsbahn (T4) eine variierende oder variable Länge aufweisen,
wobei die zweite Bewegungsbahn (T4) in einer Ebene liegt, die eine Förderebene (k) bildet,
der ungefüllte Abschnitt (T3B; T3B', T3B") der ersten Bewegungsbahn (T3; T3', T3") des ersten Förderelements (23; 24; 25; 6', 6") außerhalb der Förderebene (k) liegt,
**dadurch gekennzeichnet, dass**
der ungefüllte Abschnitt (T3B; T3B', T3B") der ersten Bewegungsbahn (T3; T3', T3") mindestens teilweise in einem Winkel zu dem gefüllten Abschnitt (T3A; T3A', T3A") der ersten Bewegungsbahn angeordnet ist.

2. Vorrichtung nach Anspruch 1, wobei der ungefüllte Abschnitt (T3B; T3B', T3B") der ersten Bewegungsbahn (T3; T3', T3") mindestens teilweise parallel zu dem gefüllten Abschnitt (T3A; T3A', T3A") der ersten Bewegungsbahn angeordnet ist.

3. Vorrichtung nach Anspruch 1, wobei die Vorrichtung mit zwei ersten Förderelementen (6', 6") bereitgestellt ist, die sich entlang der ersten Bewegungsbahnen (T3', T3") bewegen, und die ungefüllten Abschnitte (T3B', T3B") der ersten Bewegungsbahnen (T3', T3") auf zwei Seiten der Förderebene (k) angeordnet sind.

4. Vorrichtung nach Anspruch 1, wobei die gefüllten Abschnitte (T3A', T3A") der ersten Bewegungsbahnen (T3', T3") auf zwei Seiten der Förderebene (k) angeordnet sind.

5. Vorrichtung nach Anspruch 3 oder 4, wobei die gefüllten Abschnitte (T3A', T3A") und/oder die ungefüllten Abschnitte (T3B', T3B") der ersten Bewegungsbahnen (T3', T3") symmetrisch zu der Förderebene (k) angeordnet sind.

6. Vorrichtung nach einem der Ansprüche 1 bis 5, wobei der erste Förderer (3, 3', 3", 3") mit einer ersten Walze (7; 7', 7") und einer zweiten Walze (10; 10', 10") bereitgestellt ist, die in einer Richtung quer zu ihrer Drehachse beweglich sind.

7. Vorrichtung nach Anspruch 6, wobei die erste Walze (7; 7', 7") unter dem gefüllten Abschnitt (T3A; T3A', T3A") der ersten Bewegungsbahn (T3; T3', T3") angeordnet ist.

8. Vorrichtung nach einem der Ansprüche 6 oder 7, wobei die zweite Walze (10; 10', 10") unter dem gefüllten Abschnitt (T4B) der zweiten Bewegungsbahn (T4) angeordnet ist.

9. Vorrichtung nach einem der Ansprüche 6 bis 8, wobei die erste Walze (7; 7', 7") und/oder die zweite Walze (10; 10', 10") eine Antriebswalze für das erste Förderelement (23; 24; 25; 6', 6") ist.

10. Vorrichtung nach einem der Ansprüche 6 bis 9, wobei die erste Walze (7; 7', 7") und die zweite Walze (10; 10', 10") linear verschiebbar sind.

11. Vorrichtung nach einem der Ansprüche 6 bis 10, wobei die erste Walze (7; 7', 7") und die zweite Walze (10; 10', 10") sich in entgegengesetzte Richtungen bewegen, wobei die Länge des gefüllten Abschnitts (T3A; T3A', T3A") der ersten Bewegungsbahn (T3; T3', T3") und die Länge des ungefüllten Abschnitts (T3B; T3B', T3B") der ersten Bewegungsbahn (T3; T3', T3") variiert werden.

12. Vorrichtung nach einem der Ansprüche 6 bis 10, wobei die erste Walze (7; 7', 7") und die zweite Walze (10; 10', 10") sich in die gleiche Richtung bewegen, wobei die Länge des gefüllten Abschnitts (T3A; T3A', T3A") der ersten Bewegungsbahn (T3; T3', T3") und die Länge des ungefüllten Abschnitts (T3B; T3B', T3B") der ersten Bewegungsbahn (T3; T3', T3") variiert werden.

13. Vorrichtung nach einem der Ansprüche 1 bis 12, wobei der gefüllte Abschnitt (T3A; T3A', T3A") der ersten Bewegungsbahn (T3; T3', T3") und/oder der ungefüllte Abschnitt (T3B; T3B', T3B") der ersten Bewegungsbahn (T3; T3', T3") einen linearen Abschnitt umfasst/umfassen.

14. Vorrichtung nach einem der Ansprüche 1 bis 12, wobei der gefüllte Abschnitt (T3A; T3A', T3A") der ersten Bewegungsbahn (T3; T3', T3") und/oder der ungefüllte Abschnitt (T3B; T3B', T3B") der ersten Bewegungsbahn (T3; T3', T3") einen bogenförmigen Abschnitt umfasst/umfassen.

## Revendications

1. Appareil transporteur à capacité variable destiné à transporter un écoulement massique d'articles en forme de tige agencés de manière transversale par rapport à une direction de transport de l'écoulement massique, comprenant :
une entrée (2),
une sortie (5),
un premier transporteur (3) présentant au moins premier un élément de transport (23 ; 24 ; 25 ; 6', 6") destiné à soutenir l'écoulement massique,
un second transporteur (4) présentant un second élément de transport (14) destiné à soutenir l'écoulement massique,
tandis que l'entrée (2) est reliée à une entrée (12) du premier transporteur (3), une sortie (13) du premier transporteur (3) est reliée à une entrée (17) du second transporteur (4), et une sortie (18) du second transporteur (4) est reliée à la sortie (5),
en outre, le premier élément de transport (23 ; 24 ; 25 ; 6', 6") est adapté pour se déplacer le long d'une première piste de mouvement (T3 ; T3', T3") comprenant une partie remplie (T3A ; T3A', T3A") de la première piste de mouvement (T3 ; T3', T3") et une partie non remplie (T3B ; T3B', T3B") de la première piste de mouvement (T3 ; T3', T3"), tandis que dans la zone de la partie remplie (T3A ; T3A', T3A") de la première piste de mouvement (T3 ; T3', T3"), le transporteur (3) est adapté pour transporter les articles en forme de tige (R) sur le premier élément de transport (23 ; 24 ; 25 ; 6', 6") entre l'entrée (12) et la sortie (13) du premier transporteur (3), et dans la zone de la partie non remplie (T3B ; T3B', T3B") de la première piste de mouvement (T3), le transporteur (3) est adapté pour déplacer le premier élément de transport (23 ; 24 ; 25 ; 6', 6") sans les articles en forme de tige (R) entre la sortie (13) du premier transporteur (3) et l'entrée (12) du premier transporteur (3),
tandis que la partie remplie (T3A ; T3A', T3A") de la première piste de mouvement (T3 ; T3', T3") et la partie non remplie (T3B ; T3B', T3B") de la première piste de mouvement (T3 ; T3', T3") présentent une longueur variante ou variable,
en outre, le second élément de transport (14) est adapté pour se déplacer le long d'une seconde piste de mouvement (T4) comprenant une partie remplie (T4A) de la seconde piste de mouvement (T4) et une partie non remplie (T4B) de la seconde piste de mouvement (T4), tandis que dans la zone de la partie remplie (T4A) de la seconde piste de mouvement (T4), le transporteur (4) est adapté pour transporter les articles en forme de tige (R) sur le second élément de transport (14) entre l'entrée (17) et la sortie (18) du second transporteur (4), et dans la zone de la partie non remplie (T4B) de la seconde piste de mouvement (T4), le transporteur (4) est adapté pour déplacer le second élément de transport (14) sans les articles en forme de tige entre la sortie (18) du second transporteur (4) et l'entrée (17) du second transporteur (4),
tandis que la partie remplie (T4A) de la seconde piste de mouvement (T4) et la partie non remplie (T4B) de la seconde piste de mouvement (T4) présentent une longueur variante ou variable,
avec la seconde piste de mouvement (T4) se trouvant dans un plan constituant un plan de transport (k),
la partie non remplie (T3B ; T3B', T3B") de la première piste de mouvement (T3 ; T3', T3") du premier élément de transport (23 ; 24 ; 25 ; 6', 6") se trouve en dehors du plan de transport (k),
**caractérisé en ce que**
la partie non remplie (T3B ; T3B', T3B") de la première piste de mouvement (T3 ; T3', T3") se situe au moins en partie selon un angle par rapport à la partie remplie (T3A ; T3A', T3A") de la première piste de mouvement.

2. Appareil selon la revendication 1, dans lequel la partie non remplie (T3B ; T3B', T3B") de la première piste de mouvement (T3 ; T3', T3") se situe au moins en partie en parallèle par rapport à la partie remplie (T3A ; T3A', T3A") de la première piste de mouvement.

3. Appareil selon la revendication 1, dans lequel l'appareil est pourvu de deux premiers éléments de transport (6', 6") se déplaçant le long des premières pistes de mouvement (T3', T3"), et les parties non remplies (T3B', T3B") des premières pistes de mouvement (T3', T3") se situent de deux côtés du plan de transport (k).

4. Appareil selon la revendication 1, dans lequel les parties remplies (T3A', T3A") des premières pistes de mouvement (T3', T3") se situent de deux côtés du plan de transport (k).

5. Appareil selon la revendication 3 ou 4, dans lequel les parties remplies (T3A', T3A") et/ou les parties non remplies (T3B', T3B") des premières pistes de mouvement (T3', T3") se situent de manière symétrique par rapport au plan de transport (k).

6. Appareil selon l'une quelconque des revendications 1 à 5, dans lequel le premier transporteur (3, 3', 3", 3") est pourvu d'un premier rouleau (7 ; 7', 7") et d'un second rouleau (10 ; 10', 10") pouvant être déplacés dans une direction transverse par rapport à leur axe de rotation.

7. Appareil selon la revendication 6, dans lequel le premier rouleau (7 ; 7', 7") se situe en dessous de la partie remplie (T3A ; T3A', T3A") de la première piste de mouvement (T3 ; T3', T3").

8. Appareil selon l'une quelconque des revendications 6 ou 7, dans lequel le second rouleau (10 ; 10', 10") se situe en dessous de la partie remplie (T4B) de la seconde piste de mouvement (T4).

9. Appareil selon l'une quelconque des revendications 6 à 8, dans lequel le premier rouleau (7 ; 7', 7") et/ou le second rouleau (10 ; 10', 10") est un rouleau d'entraînement pour le premier élément de transport (23 ; 24 ; 25 ; 6', 6").

10. Appareil selon l'une quelconque des revendications 6 à 9, dans lequel le premier rouleau (7 ; 7', 7") et le second rouleau (10 ; 10', 10") peuvent coulisser de manière linéaire.

11. Appareil selon l'une quelconque des revendications 6 à 10, dans lequel le premier rouleau (7 ; 7', 7") et le second rouleau (10 ; 10', 10") se déplacent dans des directions opposées, faisant varier la longueur de la partie remplie (T3A ; T3A', T3A") de la première piste de mouvement (T3 ; T3', T3") et la longueur de la partie non remplie (T3B ; T3B', T3B") de la première piste de mouvement (T3 ; T3', T3").

12. Appareil selon l'une quelconque des revendications 6 à 10, dans lequel le premier rouleau (7 ; 7', 7") et le second rouleau (10 ; 10', 10") se déplacent dans la même direction, faisant varier la longueur de la partie remplie (T3A ; T3A', T3A") de la première piste de mouvement (T3 ; T3', T3") et la longueur de la partie non remplie (T3B ; T3B', T3B") de la première piste de mouvement (T3 ; T3', T3").

13. Appareil selon l'une quelconque des revendications 1 à 12, dans lequel la partie remplie (T3A ; T3A', T3A") de la première piste de mouvement (T3 ; T3', T3") et/ou la partie non remplie (T3B ; T3B', T3B") de la première piste de mouvement (T3 ; T3', T3") comprend ou comprennent une section linéaire.

14. Appareil selon l'une quelconque des revendications 1 à 12, dans lequel la partie remplie (T3A ; T3A', T3A") de la première piste de mouvement (T3 ; T3', T3") et/ou la partie non remplie (T3B ; T3B', T3B") de la première piste de mouvement (T3 ; T3', T3") comprend ou comprennent une section arquée.
